Europäisches Patentamt

European Patent Office

Office européen des brevets

(19)

(11) **EP 1 270 664 B1**

(12) **EUROPEAN PATENT SPECIFICATION**

(45) Date of publication and mention
of the grant of the patent:
**27.10.2004 Bulletin 2004/44**

(21) Application number: **00977894.5**

(22) Date of filing: **24.11.2000**

(51) Int Cl.[7]: **C08L 23/10**, C08J 5/18,
B32B 27/32, B29C 55/04,
C08K 3/00, C08K 5/00
// (C08L23/10, 23:20),
C08L57:00

(86) International application number:
**PCT/JP2000/008273**

(87) International publication number:
**WO 2001/038434 (31.05.2001 Gazette 2001/22)**

(54) **STRETCHED RESIN FILM AND PROCESS FOR PRODUCING THE SAME**

GESTRECKTER HARZFILM UND VERFAHREN ZU SEINER HERSTELLUNG

FILM ETIRE A BASE DE RESINE ET SON PROCEDE DE FABRICATION

(84) Designated Contracting States:
**AT BE CH CY DE DK ES FI FR GB GR IE IT LI LU
MC NL PT SE TR**

(30) Priority: **24.11.1999 JP 33236199**

(43) Date of publication of application:
**02.01.2003 Bulletin 2003/01**

(73) Proprietor: **Yupo Corporation
Tokyo 101-0062 (JP)**

(72) Inventors:
• **YAMANAKA,Masaaki Yupo Corporation
Ibaraki 311-1400 (JP)**

• **KIMURA, Kazuyuki Yupo Corporation
Ibaraki 311-1400 (JP)**

(74) Representative: **VOSSIUS & PARTNER
Siebertstrasse 4
81675 München (DE)**

(56) References cited:
**EP-A- 0 666 183        EP-B1- 0 457 568
JP-A- 1 060 645        JP-A- 6 306 224
JP-A- 7 068 723**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Field of the Invention

The present invention relates to an opaque stretched resin film having excellent heat shrinking properties, printability and stiffness, and a method for manufacturing thereof. The stretched resin film of the present invention is useful as a label material or wrapping material for various containers such as dry cells, beverage cans and beverage bottles.

Discussion of the Background

Printed vinyl chloride heat-shrinking film is widely used for decorating or wrapping dry cells, beverage cans and beverage bottles. However, an undesirable property of vinyl chloride resin is that it may generate hazardous gases such as hydrogen chloride gas during incineration, which causes environmental pollution. Accordingly, there is increasing research and development of materials using polyolefinic resins in order to avoid such environmental pollution. However, polyolefinic resin-based materials have the disadvantage of poor heat-shrinking properties due to the crystallinity of the polyolefinic resin.

In order to overcome this drawback, films based on mixtures of amorphous resins have been evaluated (Japanese Laid-Open Patent Publication Nos. 60-135233, 60-171150 and 07-119317). However, films prepared using amorphous resins cause misalignment of colors during printing due to their poor stiffness, or have poor ink adhesion. In addition, they have poor heat-shrinking properties, which lowers the productivity of the material, and they tend to shrink during storage.

It is therefore an object of the present invention to provide a white opaque stretched resin film having excellent heat-shrinking properties, printability and stiffness, and which does not cause environmental pollution. It is another object of the present invention to provide a method for manufacturing the stretched resin film of the present invention.

Disclosure of the Invention

The present inventors found out after our extensive investigations that a resin film uniaxially stretched after being blended with a plurality of selected thermoplastic resins can attain excellent properties which meet the object of the present invention, which led us to complete the present invention.

The present invention is therefore to provide a stretched resin film comprising a base layer (i) comprising a uniaxially stretched film and a surface layer (ii) comprising a uniaxially stretched film, which is disposed on at least one surface of the base layer (i) wherein the base layer (i) comprises 45 to 85 wt% of a propylene-based polymer (A), 5 to 30 wt% of a polybutene-1 (B), 5 to 30 wt% of a petroleum resin (C) and/or hydrogenated terpene resin (D), and 5 to 45 wt% of an organic and/or inorganic fine powder (E), and the surface layer (ii) comprises 30 to 79 wt% of a propylene-based polymer (A), 3 to 25 wt% of a polybutene-1 (B), 3 to 25 wt% of a petroleum resin (C) and/or hydrogenated terpene resin (D), and 10 to 65 wt% of an organic and/or inorganic fine powder (E).

The propylene-based polymer (A) used in the present invention is preferably a random copolymer (a1) containing ethylene in an amount of 2 to 10 wt% and propylene in an amount of 90 to 98 wt%; a random copolymer (a2) containing ethylene in an amount of 0 to 5 wt%, butene-1 in an amount of 8 to 30 wt%, and propylene in an amount of 92 to 65 wt%; a random copolymer (a3) containing ethylene in an amount of 0 to 5 wt%, propylene in an amount of 65 to 98.5 wt%, and butene-1 in an amount of 0 to 30 wt%; or a propylene homopolymer (a4). The petroleum resin (C) used in the present invention is preferably a polymer (c1) obtained by cationic polymerization of a polymerizable composition containing a $C_5$ chain olefin; a polymer (c2) obtained by thermal polymerization of a polymerizable composition containing dicyclopentadiene; a polymer (c3) obtained by cationic polymerization of a polymerizable composition containing a $C_9$ aromatic olefin; a copolymer (c4) obtained by cationic polymerization of a polymerizable composition containing a $C_5$ chain olefin and a $C_9$ aromatic olefin; or a polymer (c5) obtained by adding hydrogen into the foregoing (c1), (c2), (c3) or (c4), or a modified polymer obtained by introducing a carboxylic acid group, maleic anhydride group and/or hydroxyl group into the foregoing (c1), (c2), (c3) or (c4).

The heat- shrinkage ratio in the stretching direction of the stretched resin film of the present invention is preferably 25% or above at 100°C, and 1% or less at 50°C. The Clark stiffness in the stretching direction is preferably within a range from 10 to 300. It is further preferable for the stretched resin film of the present invention to have a total thickness within a range from 30 to 250 μm, where the base layer (i) has a thickness within a range from 50 to 98% of such total thickness. The stretched resin film preferably has an opacity of 20% or above, and is preferably composed so that the back surface thereof has a pressure-sensitive adhesion property.

The present invention still provides a method for manufacturing a stretched resin film which comprises the steps of forming a surface layer (ii) on at least one surface of a base layer (i); and uniaxially stretching the obtained stack, where such base layer (i) contains a propylene-based polymer (A) in an amount of 45 to 85 wt%, polybutene-1 (B) in an amount of 5 to 30 wt%, a petroleum resin (C) and/or hydrogen-added terpene resin (D) in an amount of 5 to 30 wt%, and an organic and/or inorganic fine powder (E) in an amount of 5 to 45 wt%; and such surface layer (ii) contains a propylene-based polymer (A) in an amount of 30 to 79 wt%, polybutene-1 (B) in an amount of 3 to 25 wt%, a petroleum resin (C) and/or hydrogen-added terpene resin (D) in an amount of 3 to 25 wt%, and an organic and/or inorganic fine powder (E) in an amount of 10 to 65 wt%.

In the manufacturing method of the present invention, the uniaxial stretching is preferably performed at a stretching temperature within a range from 65 to 150°C, and in stretching times of 1.5 to 11 times. The uniaxially stretched stack is preferably annealed within a temperature range between the stretching temperature and a temperature 30°C higher than the stretching temperature. The uniaxial stretching of the laminate is preferably effected based on a difference in the peripheral speeds of roll groups, or effected while pinching the laminate using a clip in a heat oven.

Detailed Description of the Invention

Embodiments of the stretched resin film of the present invention and the method for manufacturing thereof will be described in further detail hereinafter.

The stretched resin film used in the present invention is one that comprises a uniaxially stretched film containing a propylene-based polymer (A) in an amount of 30 to 79 wt%, polybutene- 1 (B) in an amount of 3 to 25 wt%, a petroleum resin (C) and/or hydrogenated terpene resin (D) in an amount of 3 to 25 wt%, and an organic and/or inorganic fine powder (E) in an amount of 10 to 65 wt%.

The uniaxially stretched film is used as a surface layer (ii), laminated on the base layer (i) which comprises a uniaxially stretched film which contains a propylene-based polymer (A) in an amount of 45 to 85 wt%, polybutene-1 (B) in an amount of 5 to 30 wt%, a petroleum resin (C) and/or hydrogenated terpene resin (D) in an amount of 5 to 30 wt%, and an organic and/or inorganic fine powder (E) in an amount of 5 to 45 wt%. The composition of the stretched resin film of the present invention having a base layer (i) and a surface layer (ii) is not specifically limited, except that it should have a structural unit in which the surface layer (ii) is stacked on the base layer (i). For example, the structural unit may comprise a surface layer (ii) laminated on either surface of the base layer (i), or a surface layer (ii) laminated to both sides of the base layer (i).

The base layer (i) and the surface layer (ii) each comprise propylene-based polymer (A), polybutene-1 (B), a petroleum resin (C) and/or hydrogenated terpene resin (D), and an organic and/or inorganic fine powder (E).

The propylene-based polymer (A) used for the base layer (i) and surface layer (ii) is not specifically limited provided that it contains propylene monomer. For example, the polymer (A) may be a propylene homopolymer in which only propylene is polymerized, or polymer (A) may be a propylene copolymer in which propylene and other polymerizable monomers are co-polymerized.

A preferred propylene-based polymer (A) comprises propylene monomer in an amount of 50 wt% or above, more preferably 60 wt% or above, and still more preferably 65 wt% or above. Specific examples of polymer (A) include a random copolymer (a1) comprising 2 to 10 wt% of ethylene and 90 to 98 wt% of propylene; a random copolymer (a2) containing 0 to 5 wt% of ethylene, 8 to 30 wt% of butene- 1, and 92 to 65 wt% of propylene; a random copolymer (a3) containing 0 to 5 wt% of ethylene, 98.5 to 65 wt% of propylene and 0 to 30 wt% of butene-1; and propylene homopolymer (a4). Propylene homopolymer (a4) is especially preferred. It should now be noted that, in this specification, any notation for expressing a numerical range using the word "to" indicates a range inclusive of the values placed before and after the word "to".

The propylene-based polymer (A) preferably has a melt flow rate (measured at 230°C, 2.16 kg load) of 0.5 to 30 g/10 min.

The polybutene-1 (B) used for the base layer (i) and surface layer (ii) are not specifically limited. For example, polybutene-1 (B) may be a crystalline homo-polybutene-1, or may be a copolymer comprising a small amount (e.g., 20 wt% or less) of a co-monomer, as long as the polymer retains its crystallinity. Examples of suitable co-monomers include ethylene, propylene and pentene-1.

Polybutene-1 (B) preferably has a melt flow rate of 1 g/10 min or above (measured as above).

The petroleum resin (C) used for the base layer (i) and surface layer (ii) is a resin directly derived from petroleum-based unsaturated hydrocarbons. Examples include hydrocarbons derived from cyclopentadiene, and alkylstyrene-indene resins derived from higher olefinic hydrocarbons.

Preferred examples of the petroleum resin (C) include a polymer (c1) prepared by the cationic polymerization of a polymerizable composition containing a $C_5$ chain olefin; a polymer (c2) prepared by the thermal polymerization of a polymerizable composition containing dicyclopentadiene; a polymer (c3) prepared by the cationic polymerization of a polymerizable composition containing a $C_9$ aromatic olefin; a copolymer (c4) prepared by the cationic polymerization of a polymerizable composition containing a $C_5$ chain olefin and a $C_9$ aromatic olefin; and a polymer (c5) prepared by hydrogenating the foregoing (c1), (c2), (c3) or (c4), or a modified polymer obtained by introducing a carboxylic acid group, maleic anhydride group and/or hydroxyl group into the foregoing (c1), (c2), (c3) or (c4).

The term "polymerizable composition" used above in regard to the definitions of (c1) to (c4) includes the polymerizable monomer described immediately before such words. The composition may also comprise other polymerizable monomers (i.e., the resulting polymer may be a copolymer), or no other polymerizable monomers (i.e., the resulting polymer may be a homopolymer). If another monomer is present, the amount of this other monomer is preferably 30 wt% or less, more preferably 10 wt% or less, still more preferably 5 wt% or less, and most preferably 1 wt% or less.

The $C_5$ chain olefin used for preparing (c1) and (c4) can be, for example, 1-pentene, 2-pentene, 3-pentene, pentadiene, isobutene and isobutadiene. Dicyclopentadiene used for producing (c2) is not specifically limited in regard to the position of the double bonds so long as it is a dimer of cyclopentadiene. The $C_9$ aromatic olefin used for preparing (c3) and (c4) is a monomer having a total carbon number of 9, and having an aromatic ring and a group bound thereto containing a polymerizable double bond. Examples thereof include *o*-methylstyrene, *m*-methylstyrene, *p*-methylstyrene, 1-phenylpropene, 2-phenylpropene and 3-phenylpropene. These monomers may be used alone (i.e., to prepare a homopolymer), or as mixtures of two or more such monomers. A fraction obtained during petroleum refining is particularly preferred.

Polymers (c1), (c3) and (c4) may be prepared by cationic polymerization. Polymer (c2) may be prepared by thermal polymerization. Polymer (c5) may be prepared by hydrogenation and the introduction of carboxylic acid groups, maleic anhydride groups or hydroxyl groups into (c5) may be carried out under known conditions. Any conventional conditions may be used for introducing the above-named groups as long as the target functional group can be successfully introduced.

For the petroleum resin (C), a hydrogenated polymer (c5), having a softening point of 100°C or above is particularly preferred to provide a film having good color tone and heat resistance.

There is no special limitation on the types of hydrogenated terpene resin (D) which may be used in the stretched resin film of the present invention. In addition, the conditions under which the hydrogenation is carried out, and the ratio of hydrogen addition are also not limited. "CLEARON" (trade name, product of Yasuhara Chemical Co., Ltd.) is a typical example of a suitable terpene resin (D).

Any type of organic and/or inorganic fine powder (E) may be used for the stretched resin film of the present invention.

The organic fine powder may comprise, for example, polyethylene terephthalate, polybutylene terephthalate, polyamide, polycarbonate, polyethylene naphthalate, polystyrene, melamine resin, polyethylene sulfide, polyimide, polyethyl ether ketone or polyphenylene sulfide. The preferred organic fine powder (E) has a melting point higher than that of the resin composition in order to effectively form pores.

The inorganic fine powder may be, for example, heavy calcium carbonate, precipitated calcium carbonate, fired clay, talc, titanium oxide, barium sulfate, zinc oxide, magnesium oxide, diatomaceous earth or silicon oxide. Heavy calcium carbonate, fired clay, titanium oxide and diatomaceous earth are particularly preferred since they are inexpensive, opaque and can effectively form pores during the stretching of the film.

The grain size of the organic and/or inorganic fine powder is not specifically limited. The average grain size is preferably within a range from 0.6 to 3 μm. The average grain size of the fine powder used in the surface layer (ii) is preferably smaller than that used in the base layer (i), which reduces surface projections in the film, thereby providing a smoother surface, and allowing high-precision printing. It is also preferable to suppress the content of coarse particles of 44 μm or larger, which cause surface projections, to as low as 10 ppm or less.

The base layer (i) and surface layer (ii) may be selected from the components (A) to (E), and two or more of such components may be preliminarily mixed. The base layer (i) and surface layer (ii) may employ the same material or different materials.

The base layer (i) and surface layer (ii) may contain only one of the petroleum resin (C) and hydrogen-added terpene resin (D), or may contain both the petroleum resin (C) and hydrogen-added terpene resin (D). Preferably, the stretched resin film of the present invention embodiment contains either petroleum resin (C) or hydrogen-added terpene resin (D).

The base layer (i) is prepared by uniaxially stretching a film of the resin composition containing the propylene-based polymer (A) in an amount of 45 to 85 wt%, polybutene-1 (B) in an amount of 5 to 30 wt%, the petroleum resin (C) and/or hydrogen-added terpene resin (D) in an amount of 5 to 30 wt%, and the organic and/or inorganic fine powder (E) in an amount of 5 to 45 wt%. The surface layer (ii) is manufactured by uniaxially stretching a film of the resin composition containing the propylene-based polymer (A) in an amount of 30 to 79 wt%, polybutene-1 (B) in an amount of 3 to 25 wt%, the petroleum resin (C) and/or hydrogen-added terpene resin (D) in an amount of 3 to 25 wt%, organic and/or inorganic fine powder (E) in an amount of 10 to 65 wt%.

The propylene-based polymer (A) used in the base layer (i) provides strength and heat resistance for the stretched resin film, so propylene-based polymer (A) necessarily comprises 45 wt% or more of the base layer (i). If the amount of propylen-based polymer (A) exceeds 85 wt%, however, the low-temperature stretching properties will be poor, and excellent heat shrinking properties will not be obtained.

Polybutene-1 (B) may compatabilize the propylene-based polymer (A), petroleum resin (C) and/or hydrogen-added terpene resin (D), and organic and/or inorganic fine powder (E), facilitate low-temperature stretching, and contribute to improved flexibility, tear resistance and heat-shrinking property of the film. If the content of polybutene-1 (B) is less than 5 wt%, there will be insufficient mixing of the propylene-based polymer (A), petroleum resin (C) and/or hydrogen-added terpene resin (D) and organic and/or inorganic fine powder (E), which inhibits easy stretching. On the contrary, if the amount of polybutene-1 (B) exceeds 30 wt%, the stiffness of the film will be reduced. If such a film is used as an adhesive label, high-speed labeling using an automatic labeler will be difficult.

The petroleum resin (C) and hydrogenated terpene resin (D) can improve the heat-shrinking properties and stiffness of the film of the present invention, and contribute to lowering the apparent melting point of the composition to thereby improve the stretching properties at low temperatures. A total content of the petroleum resin (C) and hydrogenated terpene resin (D) of less than 5 wt% will be unsuccessful in providing excellent heat-shrinking properties and stiffness, and will also reduce the low-temperature stretching properties. As a consequence, the tear resistance will be greatly reduced, so that the film will be very likely to break along the stretching direction.

The organic and/or inorganic fine powder (E) is responsible for making the obtained stretched resin film opaque. Amounts of fine powder (E) of less than 5 wt% are not sufficient to provide an opaque film. On the other hand, amounts of fine powder (E) which exceed 45 wt% will provide high opacity, but not uniform stretching, and will therefore cause frequent breakage of the film during stretching.

The propylene-based polymer (A) in the surface layer (ii) improves the surface strength and smoothness of the film. An amount of propylene-based polymer (A) of less than 30 wt% will not provide the desired glossiness and surface strength (hardness) of the film. On the other hand, if the amount of propylene-based polymer (A) exceeds 79 wt%, poor adhesion to printing ink will result. Polybutene-1 (B) functions as a mixing aid for the propylene-based polymer (A), petroleum resin (C) and/or hydrogen-added terpene resin (D), and organic and/or inorganic fine powder (E), as in the base layer (i). It also improves the low-temperature stretching property, flexibility, tear resistance and prevents blocking.

If the amount of polybutene-1 (B) is less than 3 wt%, the stretched resin film will have lowered flexibility and tear resistance, and if the amount of polybutene-1 (B) exceeds 25 wt%, the stretched resin film will have lower surface hardness, and is more likely to become scratched on the surface.

The petroleum resin (C) and hydrogenated terpene resin (D) can improve printability, glossiness and stiffness of the stretched resin film. If the total amount of petroleum resin (C) and hydrogenated terpene resin (D) is less than 3 wt%, the resulting stretched resin film will have poor stiffness, and if the total amount of petroleum resin (C) and hydrogenated terpene resin (D) exceeds 25 wt%, the stretched resin film will have a blocking problem (i.e., the film will tend to stick to itself upon storage).

The organic and/or inorganic fine powder (E) provides opacity, printability (ink adhesion) and prevents blocking. If the amount of the organic and/or inorganic fine powder (E) is less than 10 wt%, the stretched resin film will have poorer ink adhesion, and if the amount of the organic and/or inorganic fine powder (E) exceeds 65 wt%, the stretched resin film will tend to crack or break.

The resin composition forming the base layer (i) and the resin composition forming the surface layer (ii) may comprise, in addition to the foregoing (A) to (E), other additives, such as a heat stabilizer, a UV stabilizer, an antioxidant, an antistatic agent, an anti-blocking agent, a nucleation agent, a lubricant, etc., and mixtures thereof, as required. These additives are preferably added in an amount of 3 wt% or less.

The base layer (i) preferably accounts for 50 to 98% of the total thickness of the stretched resin film. Adjusting the thickness of the base layer (i) within the above range will provide stable stretching properties, and will ensure that the stretched resin film has a suitable stiffness and printability. If the thickness of the base layer (i) is less than *50%* of the total thickness of the stretched resin film, the film will tend to have poorer stretching and shrinking properties after low-temperature storage.

The total thickness of the stretched resin film of the present invention is preferably within a range from 30 to 250 $\mu$m.

The opacity of the stretched resin film of the present invention is preferably 20% or above and more preferably less than 40%. An opacity of less than 20% is insufficient for most uses.

The stretched resin film of the present invention can be manufactured by any known conventional method or combination of methods known to those skilled in the art. The scope of the present invention includes any stretched resin film having the composition and structure described in the present specification, however made.

The individual layers comprising the stretched resin film of the present invention may be formed, for example, by extruding a mixture of the propylene-based polymer (A), polybutene- 1 (B), petroleum resin (C) and/or hydrogenated terpene resin (D), mixed in a predetermined ratio, followed by lamination and uniaxial stretching.

The stretched resin film of the present invention having a multi-layered structure may be formed by stacking the base layer (i) and surface layer (ii) after each has been separately stretched, or by stretching both layers together after being laminated together. These methods may also be combined.

The preferred method is to stretch the base layer (i) and surface layer (ii) after they have been laminated together. More specifically, an embodiment of the method for preparing stretched resin films of the present invention is preferably to form the surface layer (ii) from a resin composition which comprises the propylene-based polymer (A) in an amount of 30 to 79 wt%, polybutene-1 (B) in an amount of 3 to 25 wt%, petroleum resin (C) and/or hydrogenated terpene resin (D) in an amount of 3 to 25 wt%, and organic and/or inorganic fine powder (E) in an amount of 10 to 65 wt% on at least one side of the base layer (i), which is prepared from a resin composition which comprises propylene-based polymer (A) in an amount of 45 to 85 wt%, polybutene-1 (B) in an amount of 5 to 30 wt%, petroleum resin (C) and/or hydrogenated terpene resin (D) in an amount of 5 to 30 wt%, and organic and/or inorganic fine powder (E) in an amount of 5 to 45 wt%, and then to uniaxially stretch the laminate thus formed. This method is simpler and less expensive than methods in which the base layer (i) and surface layer (ii) are laminated together after each has been individually stretched.

The stretching can be attained by various known methods. The stretching temperature is preferably set at a temperature which is no higher than the melting point of the crystalline resin (i.e., the polypropylene-based polymer and polybutene-1), and no lower than the glass transition temperature of the amorphous resin (i.e., the petroleum resin, hydrogenated terpene resin). More specifically, the stretching is carried out within a range from 65 to 150°C. It is particularly preferred to set the stretching temperature higher by 15°C or more than the melting point of the propylene-based polymer (A) of the base layer (i).

The stretching method may be, for example, roll stretching in which the stretching is carried out by means of the difference in peripheral speeds of the roll groups, and clip stretching using a tenter oven. In particular, uniaxial roll stretching is preferred in that the stretched film obtained thereby may have a desired shrinkage ratio which is provided by appropriately adjusting the stretching times.

The amount of stretching is not specifically limited, and can properly be determined based on the intended use of the stretched resin film of the present invention, as well as the properties of the resins used therein. The film is generally stretched within a range from 1.5 to 11 times the original dimension of the unstretched film. In particular, 1.5 to 7-fold stretching is preferred for stretched resin films prepared by the roll stretching method, as discussed above, and 5 to 11-fold stretching is preferred for stretched resin films prepared by the clip stretching method, as discussed above. If the stretched resin film comprises a polypropylene homopolymer, polybutene-1 and petroleum resin or hydrogenated terpene resin, the amount of stretching is most preferably selected from within a range from 2 to 7 times the dimension of the unstretched film.

The film is preferably annealed after the stretching. The annealing temperature is preferably selected from within a range between the stretching temperature and a temperature which is 30°C higher than the stretching temperature. The annealing can successfully reduce shrinkage during long-term storage, thereby preventing tightening of the roll of film during long-term storage. The annealing is generally carried out on the rolls or in an oven, or any combination thereof.

As required, corona discharge treatment or plasma treatment of the film surface may be employed in order to improve the adhesion of printing ink to the stretched resin film.

The stretched resin film of the present invention is valuable as a heat-shrinkable film. By virtue of its low heat-shrinking property at low temperatures and high heat-shrinking property at high temperatures, the stretched resin film of the present invention can readily shrink upon heating so that it is applicable to a wide variety of products. For example, the amount and type of materials comprising the stretched resin film of the present invention is controlled so as to provide a heat shrinkage ratio in the stretching direction of 1% or less at 50°C, and 25% or above at 100°C. In particular, a heat shrinkage ratio at 100°C of 25% provides heat shrinking properties suitable for use as a shrinkable label having an attractive appearance. A heat shrinkage ratio at 50°C of 1% or less is preferred to prevent tightening of the roll of film during storage, thereby ensuring good printability.

The stretched resin film of the present invention has a large Clark stiffness in the stretching direction. Stretched resin films having a Clark stiffness within a range of from 10 to 300 are preferred. If the Clark stiffness of the stretched resin film is less than 10, a label comprising this film tends to cause dropping or misalignment of the label during labeling using an automatic labeler, due to poor stiffness of the label itself, after it is removed from the released paper. If the Clark stiffness of the stretched resin film exceeds 300, placement of a label comprising this film onto round containers or the like tends to be difficult due to the excessive self-supporting property of the label.

The stretched resin film of the present invention may be used, itself, or as a laminate with another resin film. The stretched resin film of the present invention may also be laminated on a transparent film such as polyester film, polyamide film, polyolefin film and the like.

The stretched resin film of the present invention may be used in various applications, and is valuable as container labels for various beverage cans and various beverage bottles, labels for dry cells, and wrapping materials for various containers.

The surface layer (ii) and opposite layer of the stretched resin film of the present invention may be printed, as desired, depending on the application. There is no special limitation on the types and methods of printing the stretched resin film of the present invention. Examples of suitable printing methods include known printing techniques such as gravure printing, flexography, silk screen printing, offset printing, seal printing, UV offset press printing using ink which contains a pigment dispersed in a known vehicle. Metal vapor deposition, gross printing, matt printing, and fusion thermal transfer printing are also available. The back surface of the film is preferably subjected to metal vapor deposition.

The stretched resin film of the present invention may also be provided as a heat-shrinkable, pressure-sensitive adhesive label, if it is treated on one surface with known methods of forming a pressure sensitive and tacky layer. The stretched resin film of the present invention can also be provided on one surface with heat-sensitive color developing coating to thereby provide a heat-shrinkable color label. Such specifically functionalized stretched resin films according to the present invention may be used as labels for various containers and wrapping materials. In particular, by virtue of their shrinking properties, such films are valuable as labels for dry cells.

The present invention will further be described with reference to specific Examples and Comparative Examples. It is to be noted that the materials, amounts and ratios of materials used, details of methods and procedures can properly be modified without departing from the spirit of the present invention. Therefore the scope of the present invention should not be limited by the specific Examples described below.

Materials employed herein are listed in Table 1. The notation "MFR" in Table 1 is an abbreviation of "melt flow rate".

Table 1

| Material | Description |
|---|---|
| (1) Propylene homopolymer (a4) | MFR = 4 g/10 min (230°C, 2.16 kg load), m.p. 164°C (DSC peak temperature) (product of Mitsubishi Chemical Corporation) |
| (2) Ethylenelgropylene random copolymer (a1) | MFR = 5 g/10 min (230°C, 2.16 kg load), m.p. 137°C (DSC peak temperature) (product of Mitsubishi Chemical Corporation) |
| (3) Ethylene/propylene/ butene-1 random copolymer (a3) | MFR = 3 g/10 min (230°C, 2.16 kg load), m.p. 132°C (DSC peak temperature) (product of Mitsubishi Chemical Corporation) |
| (4) Polybutene-1 | MFR = 4 g/10 min (230°C, 2.16 kg load), m.p. 97°C (DSC peak temperature) (product of Mitsui Chemicals Inc.) |
| (5) Hydrogenated petroleum resin | softening temperature = 125°C, hydrogenated $C_9$-base petroleum resin (product of Arakawa Chemical Industries, Ltd.) |
| (6) Hydrogenated petroleum resin (c3) | softening temperature = 125°C, hydrogen-added dicyclopentadiene-base petroleum resin (product of Tonex Co., Ltd.) |
| (7) Hydrogenated terpene resin | softening temperature = 125°C, (product of Yasuhara Chemical Co., Ltd.) |
| (8) Low-density polyethylene | m.p. 106°C, density = 0.918 (product of Mitsubishi Chemical Corporation) |
| (9) Heavy calcium carbonate | average grain size = 1.2 µm, dry ground (product of Shiroishi Calcium Co., Ltd.) |

(Examples 1 to 11, and Comparative Examples 1 to 7)

The stretched resin films of the present invention (Example 1 to 11), and comparative stretched resin films (Comparative Examples 1 to 7) were prepared and further treated to provide heat-shrinking labels according to the procedures below.

The propylene-based polymer (A), polybutene-1 (B), and petroleum resin (C) or hydrogenated terpene resin (D), and organic or inorganic fine power (E) were mixed according to the material selection and amount of blending shown in Tables 2 and 3. In Examples 1 to 3 and Comparative Example 1, the compound was kneaded under fusion conditions in an extruder set at 230°C, extrusion-molded, and cooled to 50°C using a cooling apparatus, thereby providing an unstretched sheet. In Examples 4 to 11 and Comparative Examples 2 to 7, two compounds, (i) and (ii), were separately kneaded under fusion conditions in two extruders set at 230°C. Compound (ii) was disposed on the upper side of the compound (i) within an extrusion die, and the two compounds were coextruded in the form of a film, and then cooled to 50°C using a cooling apparatus, thereby providing a two-layered, unstretched sheet.

Each sheet was heated and then stretched longitudinally between rolls according to the stretching temperatures and stretching times listed in Tables 2 and 3. The stretched film was then annealed on the roll at a temperature of 90°C, and then cooled to provide a stretched film. The resulting stretched film was then treated on both surfaces by corona discharge treatment at 40 W/m$^2$ using a corona discharge treatment apparatus (product of Kasuga Denki K. K.), to provide a stretched resin film having a total thickness as listed in Tables 2 and 3.

The surface layer (ii) of the thus obtained stretched resin film was then printed with a pattern by gravure printing, using an ink (product name CCST, product of Toyo Ink Mfg. Co., Ltd.), and the back surface of the film was then laminated with a release paper, having coated thereon a pressure-sensitive adhesive in an amount of 10 g/m$^2$, to provide an adhesive sheet with a release paper covering the adhesive layer. Only the label portion of the resulting laminate was then punched (leaving the release paper unpunched).

The stretched resin film was then assessed for opacity, shrinkage ratio, and Clark stiffness. The label was assessed for the ink adhesion on the surface layer (ii), suitability for automatic labeling and heat-shrinking properties. Details of the individual tests are shown below.

(1) Opacity

Opacity was measured using a measurement instrument "SM COLOR COMPUTER" (trade name, product of Suga Test Instruments Co., Ltd.) according to the method of JIS Z-8722.

(2) Shrinkage ratio

A 10 cm × 10 cm sample of the stretched resin film was successively dipped in a water bath set at 50°C and a silicone oil bath set at 90°C for 10 seconds, respectively, immediately taken out, and then cooled by dipping in a cold water bath at 20°C. The length of the film in the longitudinal direction (post-dipping length) was measured, and size shrinkage ratio (simply referred to as "shrinkage ratio", hereinafter) in the stretching direction was determined based on the equation below.

$$\text{Shrinkage ratio (\%)} = \frac{\text{pre-dipping length - post-dipping length}}{\text{pre-dipping length}} \times 100$$

(3) Clark stiffness

The Clark stiffness was measured using an "AUTOMATIC CLARK STIFFNESS TESTER" (trade name, product of Kumagaya Riki Kogyo K.K.) according to the method of JIS P-8143.

(4) Ink adhesion of surface layer (ii)

An adhesive tape (product name "CELLOTAPE", product of Nichiban Co., Ltd.) was stuck on the gravure-printed surface, thoroughly pressed, and then peeled off at a constant velocity and at a constant angle of 90° away from the adhesive plane. The amount of ink removal was visually checked and assessed according to the criteria below:

○ : no ink removal was observed;
Δ : commercially undesirable; most of the ink was removed but peeling resistance was good; and
× : commercially unusable: all of the ink was removed and peeling resistance was poor.

(5) Suitability for automatic labeling

One hundred adhesive-coated and punched labels were placed around dry cells (AM-1 type) using an automatic labeler "MD-1" (trade name, product of Lintec Corporation) at a speed of 300 labels/min so as to align the stretching direction thereof to the circumference of the cell body. The placement of the labels was assessed according to the criteria below.

○: each of 100 labels was attached in place;
Δ: 1 to 9 labels out of 100 labels was improperly placed; and
× : 10 or more labels out of 100 labels were improperly placed.

(6) Heat-shrinking property

Fifty dry cells, labeled using an automatic labeler or manually labeled, were passed through an heated air furnace at a temperature of 250°C at speed of 25 m/min. The outer appearance of the dry cells and the heat-shrunken labels were assessed according to the criteria below.

ⓞ : the labels uniformly shrunk at the top and bottom portions of the dry cells;
○: commercially usable, although a slight non-uniformity was found in the shrinkage of the label at the top and bottom portions of the dry cells;
Δ : commercially undesirable because the non-uniformity in the shrinkage of the labels at the top and bottom portions of the dry cell ruined the appearance of the label; and
× : commercially unusable because the labels "floated" at the top and bottom portions of the dry cells due to poor shrinkage properties.

The test results are shown in Tables 2 to 4. Breakage of the film during the stretching frequently occurred in Comparative Examples 1 and 6, and film looseness was observed in Comparative Example 7.

Table 2

| | Base layer (i) | Surface layer (ii) | Sketching conditions | Annealing temp. (°C) | Layer thickness (i)(ii) | Opacity (%) | Shrinkage ratio 5/100°C | Clark stiffness MD/CD |
|---|---|---|---|---|---|---|---|---|
| | Material wt% | Material wt% | Temp. (°C), times | | | | | |
| Example 1 | (1)50 (4) 20 (5) 20 (9) 10 | | 85 4 | 95 | 60 | 55 | 0.4/38 | 16/12 |
| Example 2 | (2) 40 (4) 10 (6) 10 (9) 40 | | 85 4 | 90 | 85 | 93 | 0.7/38 | 20/13 |
| Example 3 | (1) 30 (4) 5 (5) 5 (9) 60 | | 85 4 | 110 | 60 | 97 | 0.2/30 | 13/10 |
| Comparative Example 1 | (1) 31 (4) 1 (5) 1 (9) 67 | | 110 4 | 80 | 60 | 98 | 3.8/15 | 7/4 |
| Example 4 | (1) 62 (4) 15 (5) 15 (9) 8 | (1) 60 (4) 10 (5) 10 (9) 20 | 85 5 | 90 | 80/5 | 45 | 0.7/35 | 26/14 |
| Example 5 | (1) 62 (4) 15 (6) 15 (9) 8 | (1) 60 (4) 10 (5) 10 (9) 20 | 70 3 | 80 | 80/5 | 60 | 0.8/42 | 29/17 |
| Example 6 | (1) 62 (4) 15 (6) 15 (9) 8 | (1) 60 (4) 10 (5) 10 (9) 20 | 145 9 | 150 | 80/ 5 | 50 | 0.7/33 | 12/33 |

Table 2   (continued)

| | Base layer (i) | Surface layer (ii) | Sketching conditions | Annealing temp. (°C) | Layer thickness (i)(ii) | Opacity (%) | Shrinkage ratio 5/100°C | Clark stiffness MD/CD |
|---|---|---|---|---|---|---|---|---|
| | Material wt% | Material wt% | Temp. (°C), times | | | | | |
| Example 7 | (2) 46<br>(4) 7<br>(6) 7<br>(9) 40 | (1) 32<br>(4) 4<br>(6) 4<br>(9) 60 | 85 4 | 90 | 45/40 | 97 | 0.9/37 | 24/13 |
| Example 8 | (3) 45<br>(4) 25<br>(7) 15<br>(9) 15 | (1) 33<br>(4) 20<br>(7) 10<br>(9) 37 | 85 4 | 90 | 58/2 | 70 | 0.8/40 | 15/12 |
| Example 9 | (1) 59<br>(4) 8<br>(5) 8<br>(9) 25 | (1) 43<br>(4) 6<br>(5) 6<br>(9) 45 | 85 4 | 95 | 55/ 5 | 88 | 0.7/35 | 13/11 |
| Example 10 | (2) 50<br>(4) 5<br>(5) 30<br>(9) 15 | (2) 34<br>(4) 4<br>(5) 25<br>(9) 37 | 90 4 | 100 | 150/25 | 98 | 0.9/43 | 110/58 |

Table 3

| Example 11 | (2) 50<br>(4) 5<br>(5) 30<br>(9) 15 | (2) 34<br>(4) 25<br>(5) 4<br>(9) 37 | 85 4 | 90 | 55/5 | 78 | 0.9/42 | 10/8 |
|---|---|---|---|---|---|---|---|---|
| Comparative Example 2 | (1) 22<br>(4) 37<br>(5) 38<br>(9) 3 | (1) 23<br>(4) 33<br>(5) 32<br>(9) 12 | 85 4 | 90 | 55/ 5 | 18 | 2.9/51 | 6/ 5 |
| Comparative Example 3 | (2) 47<br>(4) 3<br>(8) 3<br>(9) 47 | (2) 31<br>(4) 1<br>(5) 1<br>(9) 67 | 85 4 | 90 | 55/ 5 | 96 | 0.5/15 | 8/ 6 |
| Comparative Example 4 | (2) 44<br>(4) 4<br>(5) 37<br>(9) 15 | (2) 27<br>(4) 5<br>(5) 31<br>(9) 37 | 85 4 | 80 | 55/ 5 | 70 | 1.9/38 | 12/10 |
| Comparative Example 5 | (2) 44<br>(4) 37<br>(5) 4<br>(9) 15 | (2) 27<br>(4) 34<br>(5) 2<br>(9) 37 | 85 4 | 90 | 55/5 | 76 | 0.9/23 | 5/ 3 |
| Comparative Example 6 | (1) 62<br>(4) 15<br>(5) 15<br>(9) 8 | (1) 60<br>(4) 10<br>(5)10<br>(9) 20 | 60 6 | 100 | 80/ 5 | 85 | 3.5/18 | 35/19 |

Table 3   (continued)

| Comparative Example 7 | (1) 62 (4) 15 (5) 15 (9) 8 | (1) 60 (4) 10 (5) 10 (9) 20 | 155 12 | 170 | 80/5 | 15 | 0.2/6 | 7/21 |
|---|---|---|---|---|---|---|---|---|

Table 4

| | Ink adhesion property | Labeling suitability | Heat-shrinking Property |
|---|---|---|---|
| Example 1 | ○ | ○ | ◎ |
| Example 2 | ○ | ○ | ◎ |
| Example 3 | ○ | ○ | × |
| Comparative example 1 | ○ | Δ | ○ |
| Example 4 | ○ | ○ | ◎ |
| Example 5 | ○ | ○ | ◎ |
| Example 6 | ○ | not assessable | ○ |
| Example 7 | ○ | ○ | ◎ |
| Example 8 | ○ | ○ | ◎ |
| Example 9 | ○ | ○ | ◎ |
| Example 10 | ○ | ○ | ◎ |
| Example 11 | ○ | ○ | ◎ |
| Comparative Example 2 | Δ | Δ | ◎ |
| Comparative Example 3 | ○ | Δ | × |
| Comparative Example 4 | Δ | ○ | ◎ |
| Comparative Example 5 | ○ | × | Δ |
| Comparative Example 6 | ○ | ○ | × |
| Comparative Example 7 | ○ | not assessable | × |

As is clear from the above results, the stretched resin film of the present invention has excellent stiffness in the stretching direction and white opacity, and exhibits only a small amount of shrinkage during storage but a large amount of shrinkage upon heating. A label manufactured using the stretched resin film of the present invention has excellent opacity, ink adhesion, is suitable for use in labeling equipment, and good heat-shrinking properties, and is therefore suitable for commercial use as a label (i.e., Examples 1 to 11). On the other hand, stretched resin films departing from the conditions specified by the present invention have poor properties, and are therefore not suitable for commercial applications (i.e., Comparative Examples 1 to 7).

Commercial Applicability

The stretched resin film of the present invention is a white, opaque, heat-shrinkable film having a large amount of stiffness in the stretching direction, and exhibiting only a small amount of shrinkage during storage but a large amount of shrinkage upon heating. The stretched resin film of the present invention can provide commercially useful white, opaque labels or wrapping materials having excellent ink adhesion, suitability for use as labels, and good heat-shrinking properties. The manufacturing method of the present invention can produce such stretched resin film in an inexpensive and simple manner. The stretched resin film of the present invention is suitable for a wide variety of applications including labels or wrapping materials for dry cells, can containers or bottle containers.

**EP 1 270 664 B1**

**Claims**

1.  A stretched resin film comprising:

    a base layer (i) comprising a uniaxially stretched film; and
    a surface layer (ii) comprising a uniaxially stretched film, which is disposed on at least one surface of the base layer (i);

    wherein the base layer (i) comprises 45 to 85 wt% of a propylene-based polymer (A), 5 to 30 wt% of a polybutene-1 (B), 5 to 30 wt% of a petroleum resin (C) and/or hydrogenated terpene resin (D), and 5 to 45 wt% of an organic and/or inorganic fine powder (E), and
    the surface layer (ii) comprises 30 to 79 wt% of a propylene-based polymer (A), 3 to 25 wt% of a polybutene-1 (B), 3 to 25 wt% of a petroleum resin (C) and/or hydrogenated terpene resin (D), and 10 to 65 wt% of an organic and/or inorganic fine powder (E).

2.  The stretched resin film of Claim 1, wherein the propylene-based polymer is selected from the group consisting of:

    (a1) a random copolymer comprising 2 to 10 wt% of ethylene and 90 to 98 wt% of propylene;
    (a2) a random copolymer comprising 0 to 5 wt% of ethylene, 8 to 30 wt% of butene-1, and 92 to 65 wt% of propylene;
    (a3) a random copolymer comprising 0 to 5 wt% of ethylene, 65 to 98.5 wt% of propylene, and 0 to 30 wt% of butene-1; and
    (a4) a propylene homopolymer.

3.  The stretched resin film of Claim 1 or 2, wherein the petroleum resin (C) is selected from the group consisting of:

    (c1) a polymer prepared by the cationic polymerization of a polymerizable composition comprising a $C_5$ chain olefin;
    (c2) a polymer prepared by the thermal polymerization of a polymerizable composition comprising dicyclopentadiene;
    (c3) a polymer prepared by the cationic polymerization of a polymerizable composition comprising a $C_9$ aromatic olefin;
    (c4) a copolymer prepared by the cationic polymerization of a polymerizable composition comprising a $C_5$ chain olefin and a $C_9$ aromatic olefin;
    (c5) a polymer prepared by the hydrogenation of any of (c1), (c2), (c3) or (c4); and modified polymer prepared by introducing a carboxylic acid group, maleic anhydride group and/or hydroxyl group into any of (c1), (c2), (c3) or (c4).

4.  The stretched resin film of any one of Claims 1-3, wherein the stretched resin film has a heat-shrinkage ratio in the stretching direction of 25% or above at 100°C, and 1% or less at 50°C.

5.  The stretched resin film of any one of Claims 1-4, wherein the stretched resin film has a Clark stiffness in the stretching direction within a range from 10 to 300.

6.  The stretched resin film of any one of Claims 1-5, wherein the stretched resin film has a total thickness of 30 to 250 μm, and the base layer (i) has a thickness within a range from 50 to 98% of the total thickness of the stretched resin film.

7.  The stretched resin film of any one of Claims 1-6, wherein the stretched resin film has an opacity of 20% or above.

8.  The stretched resin film of any one of Claims 1-7, wherein the stretched resin film further comprises a pressure-sensitive adhesive.

9.  A method of preparing a stretched resin film, comprising:

    forming a surface layer (ii) on at least one surface of a base layer (i) wherein the resin composition (i) comprises 45 to 85 wt% of a propylene-based polymer (A), 5 to 30 wt% of polybutene-1 (B), 5 to 30 wt% of a petroleum resin (C) and/or hydrogenated terpene resin (D), and 5 to 45 wt% of an organic and/or inorganic fine powder (E), and the resin composition (ii) comprises 30 to 79 wt% of a propylene-based polymer (A), 3 to 25 wt% of polybutene-1 (B), 3 to 25 wt% of a petroleum resin (C) and/or hydrogenated terpene resin (D), and 10 to 65 wt% of an organic and/or inorganic fine powder (E); and
uniaxially stretching the formed laminate.

10. The method of Claim 9, wherein the stretching temperature is 65 to 150°C, and the film is stretched 1.5 to 11-fold.

11. The method of Claim 9 or 10, further comprising annealing the stretched film at a temperature range extending from the stretching temperature to a temperature 30°C higher than the stretching temperature after the uniaxial stretching step.

12. The method of any one of Claims 9-11, wherein said uniaxial stretching comprises a method selected from the group consisting of stretching with the peripheral speeds of roller groups and stretching by pinching the unstretched resin film with a clip in a heat oven and uniaxially extending the film.


**Patentansprüche**

1. Gestreckter Harzfilm, umfassend:

   eine Grundschicht (i), umfassend einen uniaxial gestreckten Film; und
   eine Oberflächenschicht (ii), umfassend einen uniaxial gestreckten Film, welcher auf mindestens einer Oberfläche der Grundschicht (i) angeordnet ist;

   wobei die Grundschicht (i) 45 bis 85 Gew.-% eines Polymers auf Propylenbasis (A), 5 bis 30 Gew.-% eines Polybutens-1 (B), 5 bis 30 Gew.-% eines Petroleumharzes (C) und/oder eines hydrierten Terpenharzes (D) und 5 bis 45 Gew.-% eines organischen und/oder anorganischen feinen Pulvers (E) umfasst, und
   die Oberflächenschicht (ii) 30 bis 79 Gew.-% eines Polymers auf Propylenbasis (A), 3 bis 25 Gew.-% eines Polybutens-1 (B), 3 bis 25 Gew.-% eines Petroleumharzes (C) und/oder eines hydrierten Terpenharzes (D) und 10 bis 65 Gew.-% eines organischen und/oder anorganischen feinen Pulvers (E) umfasst.

2. Gestreckter Harzfilm nach Anspruch 1, wobei das Polymer auf Pröpylenbasis ausgewählt ist aus:

   (a1) einem statistischen Copolymer, umfassend 2 bis 10 Gew.-% Ethylen und 90 bis 98 Gew.-% Propylen;
   (a2) einem statistischen Copolymer, umfassend 0 bis 5 Gew.-% Ethylen, 8 bis 30 Gew.-% Buten-1 und 92 bis 65 Gew.-% Propylen;
   (a3) einem statistischen Copolymer, umfassend 0 bis 5 Gew.-% Ethylen, 65 bis 98,5 Gew.-% Propylen und 0 bis 30 Gew.-% Buten-1; und
   (a4) einem Propylenhomopolymer.

3. Gestreckter Harzfilm nach Anspruch 1 oder 2, wobei das Petroleumharz (C) ausgewählt ist aus:

   (c1) einem Polymer, hergestellt durch kationische Polymerisation einer polymerisierbaren Zusammensetzung, umfassend ein Olefin mit 5 Kohlenstoffatomen in der Kette;
   (c2) einem Polymer, hergestellt durch thermische Polymerisation einer polymerisierbaren Zusammensetzung, umfassend Dicyclopentadien;
   (c3) einem Polymer, hergestellt durch kationische Polymerisation einer polymerisierbaren Zusammensetzung, umfassend ein aromatisches $C_9$-Olefin;
   (c4) einem Polymer, hergestellt durch kationische Polymerisation einer polymerisierbaren Zusammensetzung, umfassend ein Olefin mit 5 Kohlenstoffatomen in der Kette und ein aromatisches $C_9$-Olefin;
   (c5) einem Polymer, hergestellt durch Hydrierung eines von (c1), (c2), (c3) oder (c4) und einem modifizierten Polymer, hergestellt durch Einführen einer Carbonsäuregruppe, einer Malein-Anhydrid-Gruppe und/oder einer Hydroxylgruppe in eines von (c1), (c2), (c3) oder (c4).

4. Gestreckter Harzfilm nach einem der Ansprüche 1 bis 3, wobei der gestreckte Harzfilm ein Wärmeschrumpfungsverhältnis in Streckrichtung von 25% oder darüber bei 100°C und 1 % oder weniger bei 50°C aufweist.

5. Gestreckter Harzfilm nach einem der Ansprüche 1 bis 4, wobei der gestreckte Harzfilm eine Clark-Steifheit in Streckrichtung innerhalb eines Bereichs von 10 bis 300 aufweist.

6. Gestreckter Harzfilm nach einem der Ansprüche 1 bis 5, wobei der gestreckte Harzfilm eine Gesamtdicke von 30 bis 250 µm aufweist und die Grundschicht (i) eine Dicke innerhalb eines Bereichs von 50 bis 98% der Gesamtdicke des gestreckten Harzfilms aufweist.

7. Gestreckter Harzfilm nach einem der Ansprüche 1 bis 6, wobei der gestreckte Harzfilm eine Lichtundurchlässigkeit von 20% oder darüber aufweist.

8. Gestreckter Harzfilm nach einem der Ansprüche 1 bis 7, wobei der gestreckte Harzfilm ferner ein druckempfindliches Haftmittel aufweist.

9. Verfahren zur Herstellung eines gestreckten Harzfilms, umfassend:

Bilden einer Oberflächenschicht (ii) auf mindestens einer Oberfläche der Grundschicht (i), wobei die Harzzusammensetzung (i) 45 bis 85 Gew.-% eines Polymers auf Propylenbasis (A), 5 bis 30 Gew.-% Polybuten-1 (B), 5 bis 30 Gew.-% eines Petroleumharzes (C) und/oder eines hydrierten Terpenharzes (D) und 5 bis 45 Gew.-% eines organischen und/oder anorganischen feinen Pulvers (E) umfasst, und die Harzzusammensetzung (ii) 30 bis 79 Gew.-% eines Polymers auf Propylenbasis (A), 3 bis 25 Gew.-% Polybuten-1 (B), 3 bis 25 Gew.-% eines Petroleumharzes (C) und/oder eines hydrierten Terpenharzes (D) und 10 bis 65 Gew.-% eines organischen und/oder anorganischen feinen Pulvers (E) umfasst; und uniaxiales Strecken des gebildeten Laminats.

10. Verfahren nach Anspruch 9, wobei die Strecktemperatur bei 65 bis 150°C liegt und der Film 1,5- bis 11-fach gestreckt wird.

11. Verfahren nach Anspruch 9 oder 10, ferner umfassend das Härten des gestreckten Films in einem Temperaturbereich, welcher von der Strecktemperatur bis zu einer Temperatur, die um 30°C höher ist als die Strecktemperatur nach dem Schritt des uniaxialen Streckens, reicht.

12. Verfahren nach einem der Ansprüche 9 bis 11, wobei das uniaxiale Strecken ein Verfahren umfasst, welches ausgewählt ist aus dem Strecken mit den peripheren Drehzahlen von Walzengruppen und Strecken durch Festhalten des ungestreckten Harzfilmes mit einer Klammer in einem Wärmeofen und uniaxiales Dehnen des Films.

**Revendications**

1. Film étiré à base de résine comprenant :

une couche de base (i) comprenant un film étiré de manière uniaxiale ; et
une couche de surface (ii) comprenant un film étiré de manière uniaxiale, laquelle est disposée sur au moins une surface de la couche de base (i) ;

dans lequel la couche de base (i) comprend de 45 à 85 % en poids d'un polymère à base de propylène (A), de 5 à 30 % en poids d'un polybutène-1 (B), de 5 à 30 % en poids d'une résine de pétrole (C) et/ou d'une résine de terpène hydrogéné (D) et de 5 à 45 % en poids d'une poudre fine organique et/ou inorganique (E) et
la couche de surface (ii) comprend de 30 à 79 % en poids d'un polymère à base de propylène (A), de 3 à 25 % en poids d'un polybutène-1 (B), de 3 à 25 % en poids d'une résine de pétrole (C) et/ou d'une résine de terpène hydrogéné (D) et de 10 à 65 % en poids d'une poudre fine organique et/ou inorganique (E).

2. Le film étiré à base de résine selon la revendication 1, dans lequel le polymère à base de propylène est sélectionné dans le groupe consistant en :

(a1) un copolymère statistique comprenant de 2 à 10 % en poids d'éthylène et de 90 à 98 % en poids de propylène ;
(a2) un copolymère statistique comprenant de 0 à 5 % en poids d'éthylène, de 8 à 30 % en poids de butène-1 et de 92 à 65 % en poids de propylène ;
(a3) un copolymère statistique comprenant de 0 à 5 % en poids d'éthylène, de 65 à 98,5 % en poids de propylène et de 0 à 30 % en poids de butène-1 ; et

(a4) un homopolymère de propylène.

3. Le film étiré à base de résine selon l'une des revendications 1 ou 2, dans lequel la résine de pétrole (C) est sélectionnée dans le groupe constitué par :

(c1) un polymère préparé par polymérisation cationique d'une composition polymérisable comprenant une oléfine linéaire en $C_5$ ;
(c2) un polymère préparé par polymérisation thermique d'une composition polymérisable comprenant du dicyclopentadiène ;
(c3) un polymère préparé par la polymérisation cationique d'une composition polymérisable comprenant une oléfine aromatique en $C_9$ ;
(c4) un copolymère préparé par la polymérisation cationique d'une composition polymérisable comprenant une oléfine linéaire en $C_5$ et une oléfine aromatique en $C_9$ ;
(c5) un polymère préparé par l'hydrogénation de l'un quelconque de (c1), (c2), (c3) ou (c4) ;

et un polymère modifié préparé en introduisant un groupe acide carboxylique, un groupe acide maléique et/ou un groupe hydroxyle dans l'un quelconque de (c1), (c2), (c3) ou (c4).

4. Le film étiré à base de résine selon l'une quelconque des revendications 1 à 3, dans lequel le film étiré à base de résine a un rapport de retrait thermique dans la direction de l'étirage de 25 % ou plus à 100°C et de 1 % ou moins à 50°C.

5. Le film étiré à base de résine selon l'une quelconque des revendications 1 à 4, dans lequel le film étiré à base de résine a une rigidité de Clark dans la direction de l'étirage dans une plage allant de 10 à 300.

6. Le film étiré à base de résine selon l'une quelconque des revendications 1 à 5, dans lequel le film étiré à base de résine a une épaisseur totale de 30 à 250 μm et la couche de base (i) a une épaisseur dans une plage allant de 50 à 98 % de l'épaisseur totale du film étiré à base de résine.

7. Le film étiré à base de résine selon l'une quelconque des revendications 1 à 6, dans lequel le film étiré à base de résine a une opacité de 20 % ou plus.

8. Le film étiré à base de résine selon l'une quelconque des revendications 1 à 7, dans lequel le film étiré à base de résine comprend en outre un adhésif sensible à la pression.

9. Procédé de préparation d'un film étiré à base de résine comprenant :

la formation d'une couche de surface (ü) sur au moins une surface d'une couche de base (i), dans laquelle la composition de résine (i) comprend de 45 à 85 % en poids d'un polymère à base de propylène (A), de 5 à 30 % en poids de polybutène-1 (B), de 5 à 30 % en poids d'une résine de pétrole (C) et/ou d'une résine de terpène hydrogéné (D) et de 5 à 45 % en poids d'une poudre fine organique et/ou inorganique (E) et la composition de résine (ii) comprend de 30 à 79 % d'un polymère à base de propylène (A), de 3 à 25 % en poids de polybutène-1 (B), de 3 à 25 % en poids d'une résine de pétrole (C) et/ou d'une résine de terpène hydrogéné (D) et de 10 à 65 % en poids d'une poudre fine organique et/ou inorganique (E) ; et
l'étirage de manière uniaxiale du laminé formé.

10. Le procédé selon la revendication 9, dans lequel la température d'étirage est de 65 à 150°C et le film est étiré de 1,5 à 11 fois.

11. Le procédé selon la revendication 9 ou 10, comprenant en outre la cuisson du film étiré dans une plage de températures s'étendant de la température d'étirage à une température de 30°C supérieure à la température d'étirage après l'étape d'étirage uniaxial.

12. Le procédé selon l'une quelconque des revendications 9 à 11, dans lequel ledit étirage uniaxial comprend un procédé sélectionné dans le groupe consistant en l'étirage par les vitesses périphériques de groupes de rouleaux et l'étirage par le pincement du film non étiré à base de résine avec une pince dans un four chauffant et l'extension de manière uniaxiale du film.